# EUROPEAN PATENT SPECIFICATION

(11) **EP 2 839 331 B1**
(45) Date of publication and mention of the grant of the patent: **13.08.2025**
(21) Application number: 13726914.8
(22) Date of filing: 09.05.2013
(51) Int. Cl.: G02B 27/01, G02B 27/00

(54) **METHOD AND APPARATUS FOR DETERMINING REPRESENTATIONS OF DISPLAYED INFORMATION BASED ON FOCUS DISTANCE**
VERFAHREN UND VORRICHTUNG ZUR BESTIMMUNG DER DARSTELLUNG ANGEZEIGTER INFORMATIONEN AUF BASIS EINER BRENNWEITE
PROCÉDÉ ET APPAREIL POUR DÉTERMINER DES REPRÉSENTATIONS D'INFORMATIONS AFFICHÉES, SUR LA BASE D'UNE DISTANCE FOCALE

(30) Priority: 09.05.2012 US 201213467115
(43) Date of publication of application: 25.02.2015
(73) Proprietor: Nokia Technologies Oy, 02610 Espoo (FI)
(72) Inventor: WHITE, Sean, Mountain View, California 94040 (US); SCHRADER, Martin, 33720 Tampere (FI); JARVENPAA, Toni, 37800 Toijala (FI)
(74) Representative: Swindell & Pearson Limited
(86) International application number: PCT/US2013/040409
(87) International publication number: WO 2013/170073

(56) References cited:
- WO-A1-2011/110728
- WO-A1-2012/078410
- WO-A1-2013/052274
- US-A1- 2002 044 152
- US-A1- 2006 232 665
- US-A1- 2011 075 257
- US-B1- 6 201 517
- US-B1- 6 456 262

## Description

### TECHNOLOGICAL FIELD

An example of the present invention relates generally to determining the representation of information provided on a display and, more particularly, to a method, apparatus, and computer program product for determining the representations of displayed information based on a focus distance of a user.

### BACKGROUND

Device manufacturers are continually challenged to provide compelling services and applications to consumers. One area of development has been providing more immersive experiences through augmented reality and electronic displays (e.g., near-eye displays, head-worn displays, etc.). For example, in augmented reality, virtual graphics (i.e., visual representations of information) are overlaid on the physical world and presented to users on a display. These augmented reality user interfaces are then presented to users over a variety of displays, from the aforementioned head-worn display (e.g., glasses) to hand-held displays (e.g., a mobile phone or device). In some cases, the overlay of representations of information over the physical world can create potential visual miscues (e.g., focus mismatches). These visual miscues can create a poor user experience by causing, for instance, eye fatigue. Accordingly, device manufactures face significant technical challenges to reducing or eliminating the visual miscues or their impacts on the user.

US2002/044152 A1 discloses a system which integrates virtual information with real world images presented on a display, such as a head-mounted display of a wearable computer. The system modifies how the virtual information is presented to alter whether the virtual information is more or less visible relative to the real world images. The modification may be made dynamically, such as in response to a change in the user's context, or user's eye focus on the display, or a user command. The virtual information may be modified in a number of ways, such as adjusting the transparency of the information, modifying the color of the virtual information, enclosing the information in borders, and changing the location of the virtual information on the display. Through these techniques, the system provides the information to the user in a way that minimizes distraction of the user's view of the real world images.

US6456262B1 discloses an electronic device which may include a microdisplay in which a displayed image element may be selected by gazing upon it. An eye gaze detector may determine what the user is looking at at any given instance of time if the user looks at it for sufficient time. Once an image element is identified as being selected by being gazed upon, the screen display may be altered to change the appearance of the selected image element and the unselected image elements. For example, the selected image element may be brought into focus and other image elements may be blurred.

US2011/075257A1 discloses a display which is placed in an optical pathway extending from an entrance pupil of a person's eye to a real-world scene beyond the eye. The display includes at least one 2-D added-image source that is addressable to produce a light pattern corresponding to a virtual object. The source is situated to direct the light pattern toward the person's eye to superimpose the virtual object on an image of the real-world scene as perceived by the eye via the optical pathway. An active-optical element is situated between the eye and the added-image source at a location that is optically conjugate to the entrance pupil and at which the active-optical element forms an intermediate image of the light pattern from the added-image source. The active-optical element has variable optical power and is addressable to change its optical power to produce a corresponding change in perceived distance at which the intermediate image is formed, as an added image to the real-world scene, relative to the eye.

US 6,201,517 discloses a display apparatus that displays an image based on image data and distance data concerning each pixel. The display apparatus has a detector, a display data generator. The detector detects a visual range from a viewer's eye to the viewer's point of regard. The generator produces display data based on the image data, the distance data and the visual range. The display apparatus further has an image display, projector and controller. The image display displays an image based on the display data. The projector projects the displayed image as a virtual image. The controller controls a projection distance of the virtual image so that the virtual image is projected onto the point of regard.

WO 2012/078410 discloses a method for overlaying first and second images in a common focal plane of a viewer comprises forming the first image and guiding the first and second images along an axis to a pupil of the viewer. The method further comprises adjustably diverging the first and second images at an adaptive diverging optic to bring the first image into focus at the common focal plane, and, adjustably converging the second image at an adaptive converging optic to bring the second image into focus at the common focal plane.

WO 2013/0522474 discloses an optical system that has an aperture through which virtual and real-world images are viewable along a viewing axis. The optical system may be incorporated into a head-mounted display (HMD). By modulating the length of the optical path along an optical axis within the optical system, the virtual image may appear to be at different distances away from the HMD wearer. The wearable computer of the HMD may be used to control the length of the optical path. The length of the optical path may be modulated using, for example, a piezoelectric actuator or stepper motor. By determining the distance to an object with respect to the HMD using a range-finder or autofocus camera, the virtual images may be controlled to appear at various distances and locations in relation to the target object and/or HMD wearer.

### BRIEF SUMMARY

The scope of the invention is defined in the appended claims. A method, apparatus, and computer program product are therefore provided for determining the representations of displayed information. In an embodiment, the method, apparatus, and computer program product determines a representation of information (e.g., the visual or rendering characteristics of the representation) based on the focus distance of a user (e.g., a distance associated with where the user is looking or where the user's attention is focused in the field of view provided on the display). By way of example, the representation of information may be blurred, shadowed, colored, etc. based on whether the representation aligns with the determined focus distance. In this way, the various example embodiments of the present disclosure can reduce potential visual miscues and user eye fatigue, thereby improving the user experience associated with various displays.

Other
aspects, features, and advantages are readily apparent from the following detailed description, simply by illustrating a number of particular embodiments and implementations, including the best mode contemplated for carrying out the invention. The disclosure provides other and different embodiments, and several details can be modified in various obvious respects, all without departing from the scope of the claims. Accordingly, the drawings and description are to be regarded as illustrative in nature, and not as restrictive.

### BRIEF DESCRIPTION OF THE DRAWINGS

The embodiments of the disclosure are illustrated by way of example, and not by way of limitation, in the figures of the accompanying drawings:
FIG. 1A is a perspective view of a display embodied by a pair of glasses with a see-through display, according to at least one example embodiment;
FIG. 1B is a perspective view of a see-through display illustrating a visual miscue, according to at least one example embodiment;
FIG. 1C is a perspective view of a display with dynamic focus optical components, according to at least one example embodiment;
FIG. 1D is a perspective view of a display with a multifocal plane component, according to at least one example embodiment;
FIG. 2 is a block diagram of an apparatus for determining representations of displayed information based on focus distance, according to at least one example embodiment;
FIG. 3 is a block diagram of operations for determining representations of displayed information based on focus distance, according to at least one example embodiment;
FIG. 4 is a block diagram of operations for determining representations of displayed information based on determining a subject of interest, according to at least one example embodiment;
FIG. 5 is a user's view through a display, according to at least one example embodiment;
FIG. 6 is a block diagram of operations for determining focal point settings for dynamic focus optical components of display based, according to at least one example embodiment
FIGS. 7A-7D are perspective views of a display providing focus correction using dynamic focus optical components, according to at least one example embodiment;
FIG. 8 is a diagram of a chip set that can be used to implement at least one example embodiment; and
FIG. 9 is a diagram of a mobile terminal (e.g., handset) that can be used to implement at least one example embodiment.

### DETAILED DESCRIPTION OF SOME EMBODIMENTS

Examples of a method, apparatus, and computer program product for determining representations of displayed information based on focus distance are disclosed. In the following description, for the purposes of explanation, numerous specific details are set forth in order to provide a thorough understanding of the embodiments of the disclosure. It is apparent, however, to one skilled in the art that the embodiments of the disclosure may be practiced without these specific details or with an equivalent arrangement. In other instances, well-known structures and devices are shown in block diagram form in order to avoid unnecessarily obscuring the embodiments of the disclosure.

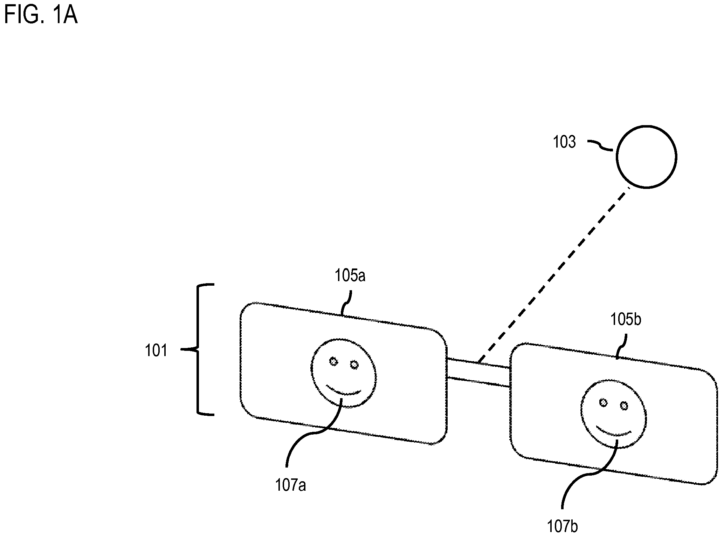

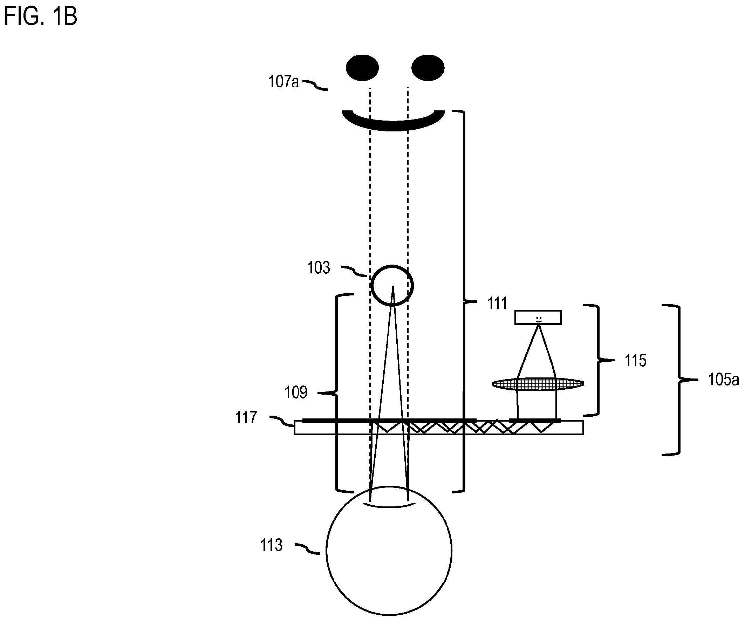

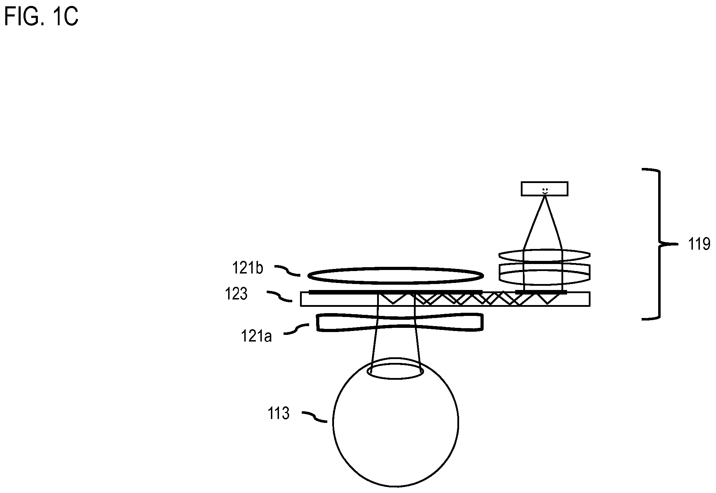

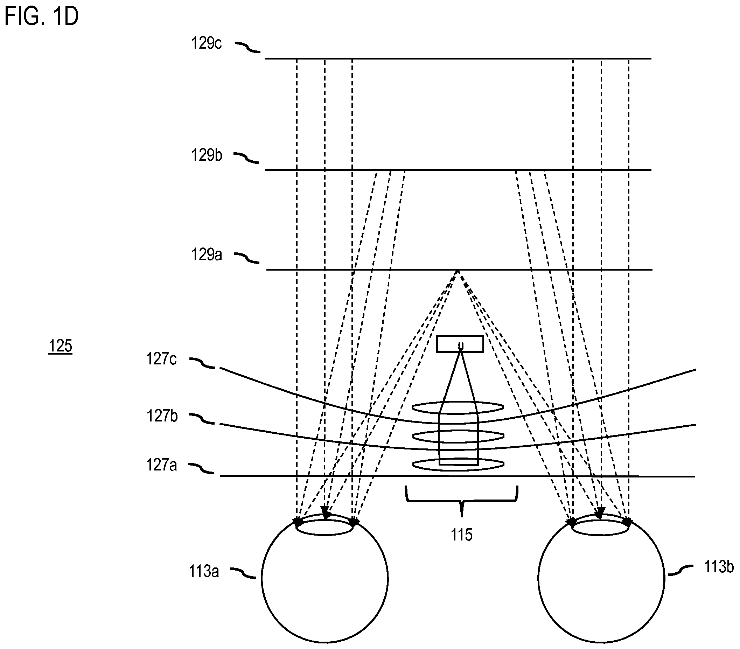

FIG. 1A is a perspective view of a display embodied by a pair of glasses with a see-through display, according to at least one example embodiment. As discussed previously, see-through displays and other electronic displays may be used to present a mixture of virtual information and physical real-world information. In other words, a see-through display enables a presentation of virtual data (e.g., visual representations of the data) while enabling the user to view information, objects, scenes, etc. through the display. For example, augmented reality applications may provide graphical overlays over live scenes to present representations of information to enhance or supplement the scene viewable through the display. As shown in FIG. 1, a display 101 is embodied as a pair of head-worn glasses with a see-through display. In the illustrated example, a user is viewing a real-world object 103 (e.g., a sphere) through the display 101. In at least one example embodiment, the display 101 includes two lenses representing respective subdisplays 105a and 105b to provide a binocular view of the object 103. Through each subdisplay 105a and 105b, the object 103 is visible. In this case, additional information (e.g., representations 107a and 107b of smiley faces, also collectively referred to as representations 107) is also presented as overlays on the object 103 to provide an augmented reality display.

Embodiments of a see-through display includes, for instance, the glasses depicted FIG. 1A. However, the various embodiments of the method, apparatus, and computer program product described herein also are applicable to any embodiment of see-through displays including, for instance, heads-up display (HUD) units, goggles, visors, windshields, windows, and the like. Typically, see-through displays like the display 101 have been implemented with a fixed point of focus for presenting the representations of the overlaid information. This can cause conflicts or visual miscues when the fixed focus of the display is set but other depth cues (e.g., vergence, shadows, etc.) cause the user to perceive the object 103 and the representations 107a and 107b at different depths. For example, in binocular vision, looking at the object 103 at a distance will automatically cause vergence and accommodation in the eye. Vergence, for instance, is the movement of both eyes to move the object 103 of attention into the fovea of the retinas. Accommodation, for instance, is the process by which the eye changes optical power to create a clear foveal image in focus, much like focusing a camera lens.

Accordingly, a conflict or visual miscue is the vergence-accommodation mismatch (e.g., a focus mismatch), where the eye accommodates or focuses to a different depth than the expected depth for accommodation. This can cause fatigue or discomfort in the eye. In a fixed-focus system, this problem is compounded because the eye generally will try to accommodate at a fixed focus, regardless of other depth cues.

FIG. 1B is a perspective view of a see-through display illustrating a visual miscue, according to at least one example embodiment. Although FIG. 1B illustrates the visual miscue with respect to a see-through display, similar visual miscues may exist in other types of displays including, e.g., embedded displays. In addition, depending on the rendering system employed by the see-through display, the display need not have the same components described below. For example, depending on the renderer 115 that is used for the display, a lightguide 117 may or may not be present. As shown in this example, FIG. 1B depicts one subdisplay 105a (e.g., one lens of the glasses of the display 101) of the display 101 from a top view. As shown from the top view, the object distance 109 (e.g., a perceived distance from the user's eye 113 to the object 103) and the representational distance 111 (e.g., a perceived distance from the user's eye 113 to the representation 107a) do not coincide when the subdisplay 105a is operating in a fixed focus mode. For example, when operating in a fixed focus mode, the subdisplay 105a may project (e.g., via a renderer 115) the representation 107a through a lightguide 117 (e.g., the lens) to be perceived by the user at the representational distance 111 (e.g., typically set at infinity for a fixed focus mode). However, in this example, the representational distance 111 (e.g., infinity) conflicts with the perceived object distance 109 (e.g., a finite distance). Accordingly, because representation 107a is intended to be displayed on the object 103, the difference between accommodating at an infinite distance for the representation 107a versus accommodating at a finite distance for the object 103 can create a visual miscue or conflict in the user's eye.

To address at least these challenges, the various embodiments of the method, the apparatus, and the computer program product described herein introduce the capability to determine how representations 107 are presented in the display 101 based on a focus distance of the user. In at least one example embodiment, the representations 107 are presented so that they correspond to the focus distance of the user. By way of example, the focus distance represents the distance to the point from the user's eye 113 on which the user is focusing or accommodating. The various embodiments of the present disclosure enable determination of how representations are to be presented in the display 101 based on optical techniques, non-optical techniques, or a combination thereof. By way of example, the representations are determined so that visual miscues or conflicts can be reduced or eliminated through the optical and non-optical techniques.

Optical techniques are based on determining a focus distance of a user, determining focal point settings based on the focus distance, and then configuring one or more dynamic focus optical elements with the determined focal point settings. In at least one example embodiment, the focus distance is determined based on gaze tracking information. By way of example, a gaze tracker can measure where the visual axis of each eye is pointing. The gaze tracker can then calculate an intersection point of the visual axes to determine a convergence distance of the eyes. In at least one example embodiment of the gaze tracker, the convergence distance is then used as the focus distance or focus point of each eye. It is contemplated that the other means, including non-optical means, can be used to determine the focus distance of the eye.

In addition or alternatively, the focus distance can be determined through user interface interaction by a user (e.g., selecting a specific point in the user's field of view of display with an input device to indicate the focus distance). At least one example embodiment of the present disclosure uses gaze tracking to determine the focus of the user and displays the representations 107 of information on each lens of a near eye display so that the representations 107 properly correspond to the focus distance of the user. For example, if the user is focusing on a virtual object that should be rendered at a distance of 4 feet, gaze tracking can be used to detect the user's focus on this distance, and the focal point settings of optics of the display are changed dynamically to result in a focus of 4 feet. In at least one example embodiment, as the focus distance of the user changes, the focal point settings of the dynamic focus optical components of the display can also be dynamically change to focus the optics to the distance of the object under the user's gaze or attention.

FIG. 1C depicts at least one example embodiment of a display 119 that employs dynamic focus optical components to represent a determined focus distance for representations 107. More specifically, the display 119 includes two dynamic focus optical components 121a and 121b whose focal point settings can be dynamically changed to alter their focus. It is contemplated that the dynamic focus optical components 121a and 121b can use technologies such as fluidics, electrooptics, or any other dynamic focusing technology. For example, fluidics-based dynamic focus components may include focusing elements whose focal point settings or focus can be changed by fluidic injection or deflation of the focusing elements. Electrooptic-based dynamic focus components employ materials whose optical properties (e.g., birefringence) can be changed in response to varying of an electric field. The change in optical properties can then be used to alter the focal point settings or focus of the electrooptic-based dynamic focus components. One advantage of such dynamic focus optical components is the capability to support continuous focus over a range of distances. Another example includes a lens-system with focusing capability based on piezoelectric movement of its lenses. The examples of focusing technologies described herein are provided as examples and are not intended to limit the use of other technologies or means for achieving dynamic focus.

As shown in FIG. 1C, the display 119 is a see-through display with one dynamic focus optical component 121a positioned between a viewing location (e.g., a user's eye 113) and a lightguide 123 through which the representations 107 are presented. A second dynamic focus optical component 121b is positioned between the lightguide 123 and the information that is being viewed through the lightguide 123 or see-through display. In this way, the focal point settings of for correcting the focus of the representations 107 can be independently controlled from the focal point settings for ensuring that information viewed through the display 119. In at least one example embodiment, the information viewed through the display 119 may be other representations 107 or other objects. In this way, multiple displays 119 can be layered to provide more complex control of focus control of both representations 107 and information viewed through the display.

In an example embodiment that is not claimed, the display may be a non-see-through display that presents representations 107 of data without overlaying the representations 107 on a see-through view to the physical world or other information. In this example, the display would be opaque and employ a dynamic focus optical element in front of the display to alter the focal point settings or focus for viewing representations 107 on the display. The descriptions of the configuration and numbers of dynamic focus optical elements, lightguides, displays, and the like are provided as examples and are not intended to be limiting. It is contemplated that any number of the components described in the various embodiments can be combined or used in any combination.

FIG. 1D depicts at least one example embodiment of a display 125 that provides an optical technique for dynamic focus based on multiple focal planes. As shown, the display 125 includes three lightguides 127a-127c (e.g., exit pupil expanders (EPEs)) configured to display representations 107 of data at respective focal point settings or focus distances 129a-129c. In this example, each lightguide 127a-127d is associated with a fixed but different focal point setting or focal plane (e.g., close focal plane 129a, middle focal plane 129b, and infinite focal plane 129c). Depending on the desired focus distance, the renderer 115 can select which of the lightguides 127a-127c has a focal point setting closest to the desired focus distance. The renderer 115 can then present the representations 107 through the selected lightguide or focal plane. In at least one example embodiment, the lightguides 127a-127c are curved to enable closer focus distance matching between the representations 107 and data (e.g., an image source) seen through the display 125. By way of example, the curved lightguides 127a-127c can be stacked cylindrically or spherically shaped EPEs for multiple virtual image distances. Although the example of FIG. 1D is described with respect to three lightguides 127a-127c providing three focal planes 129a-129c, in at least one example embodiment, the display 125 can be configured with any number of lightguides or focal planes depending on, for instance, how fine a granularity is desired for the focal point settings between each discrete focal plane.

As noted above, in at least one example embodiment, non-optical techniques can be used in addition to or, in examples not claimed, in place of the optical techniques described above to determine how the representations 107 of data can be presented to reduce or avoid visual miscues or conflicts. For example, a display (e.g., the display 101, the display 119, or the display 125) can determine or generate representations 107 to create a sense of depth and focus based on (1) the focus distance of a user, (2) whether the representation 107 is a subject of interest to the user, or (3) a combination thereof. In at least one example embodiment, the display 101 determines the focus distance of the user and then determines the representations 107 to present based on the focus distance. The display 101 can, for instance, render representations 107 of data out of focus when they are not subject of the gaze or focus of the user and should be fuzzy. In at least one example embodiment, in addition to blurring or defocusing a representation, other rendering characteristics (e.g., shadow, vergence, color, etc.) can be varied based on the focus distance.

In at least one example embodiment, the various embodiments of the method, apparatus, and computer program product of the present disclosure can be enhanced with depth sensing information. For example, the display 101 may include a forward facing depth sensing camera or other similar technology to detect the depth and geometry of physical objects in the view of the user. In this case, the display 101 can detect the distance of a given physical object in focus and make sure that any representations 107 of data associated with the given physical object are location at the proper focal distance and that the focus is adjusted accordingly.

The processes described herein for determining representations of displayed information based on focus distance may be advantageously implemented via software, hardware, firmware or a combination of software and/or firmware and/or hardware. For example, the processes described herein, may be advantageously implemented via processor(s), Digital Signal Processing (DSP) chip, an Application Specific Integrated Circuit (ASIC), Field Programmable Gate Arrays (FPGAs), etc. Such exemplary hardware for performing the described functions is detailed below.

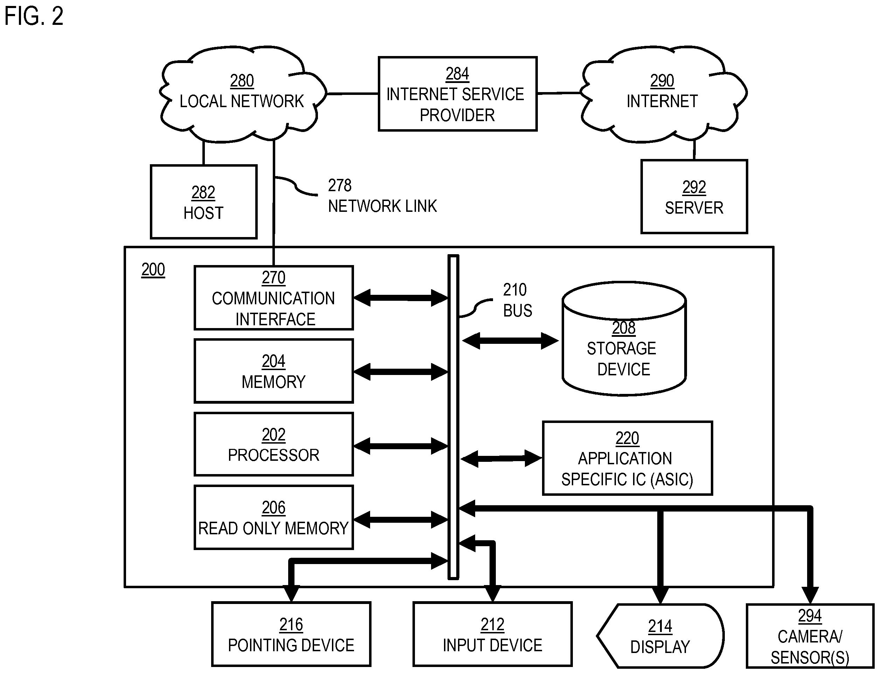

FIG. 2 is a block diagram of an apparatus 200 for determining representations of displayed information based on focus distance, according to at least one example embodiment of the present disclosure. In at least one example embodiment, the apparatus 200 is associated with or incorporated in the display 101, the display 119, and/or the display 125 described previously with respect to FIG. 1. However, it is contemplated that other devices or equipment can deploy all or a portion of the illustrated hardware and components of apparatus 200. In at least one example embodiment, apparatus 200 is programmed (e.g., via computer program code or instructions) to determine representations of displayed information based on focus distance as described herein and includes a communication mechanism such as a bus 210 for passing information between other internal and external components of the apparatus 200. Information (also called data) is represented as a physical expression of a measurable phenomenon, typically electric voltages, but including, in other embodiments, such phenomena as magnetic, electromagnetic, pressure, chemical, biological, molecular, atomic, subatomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In at least one example embodiment, information called analog data is represented by a near continuum of measurable values within a particular range. Apparatus 200, or a portion thereof, constitutes a means for performing one or more steps of determining representations of displayed information based on focus distance as described with respect the various embodiments of the method, apparatus, and computer program product discussed herein.

A bus 210 includes one or more parallel conductors of information so that information is transferred quickly among devices coupled to the bus 210. One or more processors 202 for processing information are coupled with the bus 210.

A processor (or multiple processors) 202 performs a set of operations on information as specified by computer program code related to determining representations of displayed information based on focus distance. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 210 and placing information on the bus 210. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 202, such as a sequence of operation codes, constitute processor instructions, also called computer system instructions or, simply, computer instructions. Processors may be implemented as mechanical, electrical, magnetic, optical, chemical or quantum components, among others, alone or in combination.

Apparatus 200 also includes a memory 204 coupled to bus 210. The memory 204, such as a random access memory (RAM) or any other dynamic storage device, stores information including processor instructions for determining representations of displayed information based on focus distance. Dynamic memory allows information stored therein to be changed by the apparatus 200. RAM allows a unit of information stored at a location called a memory address to be stored and retrieved independently of information at neighboring addresses. The memory 204 is also used by the processor 202 to store temporary values during execution of processor instructions. The apparatus 200 also includes a read only memory (ROM) 206 or any other static storage device coupled to the bus 210 for storing static information, including instructions, that is not changed by the apparatus 200. Some memory is composed of volatile storage that loses the information stored thereon when power is lost. Also coupled to bus 210 is a non-volatile (persistent) storage device 208, such as a magnetic disk, optical disk or flash card, for storing information, including instructions, that persists even when the apparatus 200 is turned off or otherwise loses power.

Information, including instructions for determining representations of displayed information based on focus distance, is provided to the bus 210 for use by the processor from an external input device 212, such as a keyboard containing alphanumeric keys operated by a human user, or a camera/sensor 294. A camera/sensor 294 detects conditions in its vicinity (e.g., depth information) and transforms those detections into physical expression compatible with the measurable phenomenon used to represent information in apparatus 200. Examples of sensors 294 include, for instance, location sensors (e.g., GPS location receivers), position sensors (e.g., compass, gyroscope, accelerometer), environmental sensors (e.g., depth sensors, barometer, temperature sensor, light sensor, microphone), gaze tracking sensors, and the like.

Other external devices coupled to bus 210, used primarily for interacting with humans, include a display device 214, such as a near eye display, head worn display, cathode ray tube (CRT), a liquid crystal display (LCD), a light emitting diode (LED) display, an organic LED (OLED) display, a plasma screen, or a printer for presenting text or images, and a pointing device 216, such as a mouse, a trackball, cursor direction keys, or a motion sensor, for controlling a position of a small cursor image presented on the display 214 and issuing commands associated with graphical elements presented on the display 214. In at least one example embodiment, the commands include, for instance, indicating a focus distance, a subject of interest, and the like. In at least one example embodiment, for example, in embodiments in which the apparatus 200 performs all functions automatically without human input, one or more of external input device 212, display device 214 and pointing device 216 is omitted.

In the illustrated embodiment, special purpose hardware, such as an application specific integrated circuit (ASIC) 220, is coupled to bus 210. The special purpose hardware is configured to perform operations not performed by processor 202 quickly enough for special purposes. Examples of ASICs include graphics accelerator cards for generating images for display 214, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Apparatus 200 also includes one or more instances of a communications interface 270 coupled to bus 210. Communication interface 270 provides a one-way or two-way communication coupling to a variety of external devices that operate with their own processors, such as external displays. In general, the coupling is with a network link 278 that is connected to a local network 280 to which a variety of external devices with their own processors are connected. For example, communications interface 270 may be a local area network (LAN) card to provide a data communication connection to a compatible LAN, such as Ethernet. Wireless links may also be implemented. For wireless links, the communications interface 270 sends or receives or both sends and receives electrical, acoustic or electromagnetic signals, including infrared and optical signals, that carry information streams, such as digital data. For example, in wireless handheld devices, such as mobile telephones like cell phones, the communications interface 270 includes a radio band electromagnetic transmitter and receiver called a radio transceiver. In at least one example embodiment, the communications interface 270 enables connection to the local network 280, Internet service provider 284, and/or the Internet 290 for determining representations of displayed information based on focus distance.

The term "computer-readable medium" as used herein refers to any medium that participates in providing information to processor 202, including instructions for execution. Such a medium may take many forms, including, but not limited to computer-readable storage medium (e.g., non-volatile media, volatile media), and transmission media. Non-transitory media, such as non-volatile media, include, for example, optical or magnetic disks, such as storage device 208. Volatile media include, for example, dynamic memory 204. Transmission media include, for example, twisted pair cables, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, an EEPROM, a flash memory, any other memory chip or cartridge, a carrier wave, or any other medium from which a computer can read. The term computer-readable storage medium is used herein to refer to any computer-readable medium except transmission media.

Logic encoded in one or more tangible media includes one or both of processor instructions on a computer-readable storage media and special purpose hardware, such as ASIC 220.

Network link 278 typically provides information communication using transmission media through one or more networks to other devices that use or process the information. For example, network link 278 may provide a connection through local network 280 to a host computer 282 or to equipment 284 operated by an Internet Service Provider (ISP). ISP equipment 284 in turn provides data communication services through the public, world-wide packet-switching communication network of networks referred to as the Internet 290.

A computer called a server host 292 connected to the Internet hosts a process that provides a service in response to information received over the Internet. For example, server host 292 hosts a process that provides information for presentation at display 214. It is contemplated that the components of apparatus 200 can be deployed in various configurations within other devices or components.

At least one embodiment of the present disclosure is related to the use of apparatus 200 for implementing some or all of the techniques described herein. According to at least one example embodiment of the disclosure, those techniques are performed by apparatus 200 in response to processor 202 executing one or more sequences of one or more processor instructions contained in memory 204. Such instructions, also called computer instructions, software and program code, may be read into memory 204 from another computer-readable medium such as storage device 208 or network link 278. Execution of the sequences of instructions contained in memory 204 causes processor 202 to perform one or more of the method steps described herein. In alternative embodiments, hardware, such as ASIC 220, may be used in place of or in combination with software to implement the disclosure. Thus, embodiments of the disclosure are not limited to any specific combination of hardware and software, unless otherwise explicitly stated herein.

The signals transmitted over network link 278 and other networks through communications interface 270, carry information to and from apparatus 200. Apparatus 200 can send and receive information, including program code, through the networks 280, 290 among others, through network link 278 and communications interface 270. In an example using the Internet 290, a server host 292 transmits program code for a particular application, requested by a message sent from apparatus 200, through Internet 290, ISP equipment 284, local network 280 and communications interface 270. The received code may be executed by processor 202 as it is received, or may be stored in memory 204 or in storage device 208 or any other non-volatile storage for later execution, or both. In this manner, apparatus 200 may obtain application program code in the form of signals on a carrier wave.

Various forms of computer readable media may be involved in carrying one or more sequence of instructions or data or both to processor 202 for execution. For example, instructions and data may initially be carried on a magnetic disk of a remote computer such as host 282. The remote computer loads the instructions and data into its dynamic memory and sends the instructions and data over a telephone line using a modem. A communications interface 270 receives the instructions and data carried in the infrared signal and places information representing the instructions and data onto bus 210. Bus 210 carries the information to memory 204 from which processor 202 retrieves and executes the instructions using some of the data sent with the instructions. The instructions and data received in memory 204 may optionally be stored on storage device 208, either before or after execution by the processor 202.

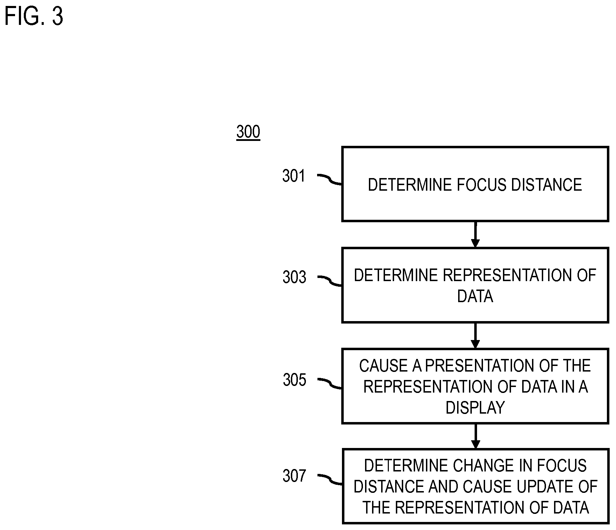

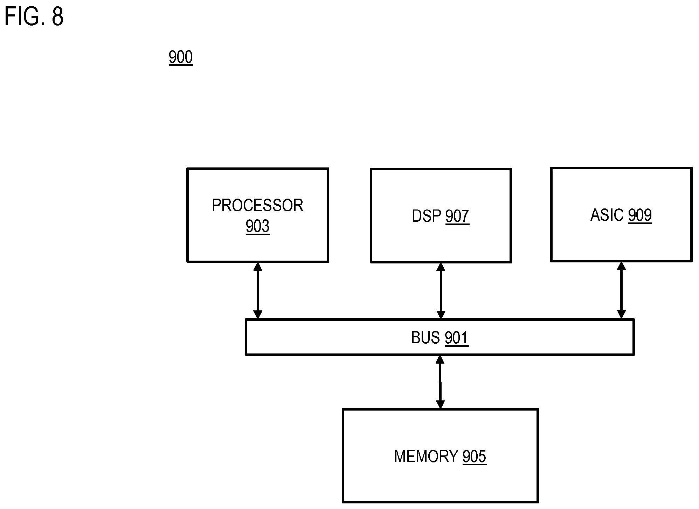

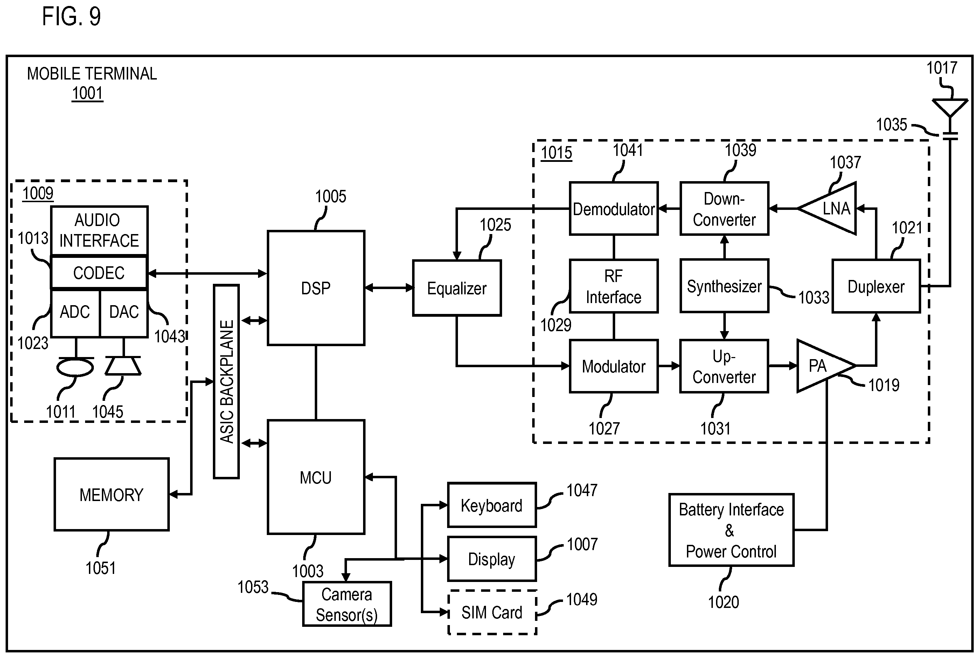

FIG. 3 is a block diagram of operations for determining representations of displayed information based on focus distance, according to at least one example embodiment of the present disclosure. In at least one example embodiment, the apparatus 200 and/or its components (e.g., processor 202, display 214, camera/sensors 294) of FIG. 2 perform and/or provide means for performing any of the operations described in the process 300 of FIG. 3. In addition or alternatively, a chip set including a processor and a memory as shown in FIG. 8 and/or a mobile terminal as shown in FIG. 9 may include means for performing any of the operations of the process 300. It also is noted that the operations 301-307 of FIG. 3 are provided as examples of at least one embodiment of the present disclosure. Moreover, the ordering of the operations 301-307 can be changed and some of the operations 301-307 may be combined. For example, operation 307 may or may not be performed or may be combined with operation 301 or any of the other operations 303 or 305.

As noted previously, potential visual miscues and conflicts (e.g., focus mismatches) and/or their impact on a user can be reduced or eliminated by optical and/or non-optical techniques. The method, apparatus, and computer program product for performing the operations of the process 300 relate to non-optical techniques for manipulating or determining the displayed representations 107 of data on the display 101. In operation 301, the apparatus 200 performs and includes means (e.g., a processor 202, camera/sensors 294, input device 212, pointing device 216, etc.) for determining a focus distance of a user. By way of example, the focus distance represents the distance to a point in a display's (e.g., displays 101, 119, 125, and/or 214) field of view this is the subject of the user's attention.

In at least one example embodiment, the point in the field of view and the focus distance are determined using gaze tracking information. Accordingly, the apparatus 200 may be configured with means (e.g., camera/sensors 294) to determine the point of attention by tracking the gaze of the user and to determine the focus distance based on the gaze tracking information. In at least one example embodiment, the apparatus 200 is configured with means (e.g., processor 202, memory 204, camera/sensors 294) to maintain a depth buffer of information, data and/or objects (e.g., both physical and virtual) present in at least one scene within a field of view of a display 101. For example, the apparatus 200 may include means such as a forward facing depth sensing camera to create the depth buffer. The gaze tracking information can then, for instance, be matched against the depth buffer to determine the focus distance. In at least one example embodiment, the apparatus 200 may be configured with means (e.g., processor 202, input device 212, pointing device 216, camera/sensors 294) to determine the point in the display's field of view that is of interest to the user based on user interaction, input, and/or sensed contextual information. For example, in addition to or instead of the gaze tracking information, the apparatus 200 may determine what point in the field of view is selected (e.g., via input device 212, pointing device 216) by the user. In another example, the apparatus 200 may process sensed contextual information (e.g., accelerometer data, compass data, gyroscope data, etc.) to determine a direction or mode of movement for indicating a point of attention. This point can then be compared against the depth buffer to determine a focus distance.

After determining the focus distance of the user, the apparatus 200 performs and is configured with means (e.g., processor 202) for determining a representation of data that is to be presented in the display 101 based on the focus distance (operation 303). In at least one example embodiment, determining the representation includes, for instance, determining the visual characteristics of the representation that reduces or eliminates potential visual miscues or conflicts (e.g., focus mismatches) that may contribute to eye fatigue and/or a poor user experience when viewing the display 101.

In at least one example embodiment, the apparatus 200 may be configured to determine the representation based on other parameters in addition or as an alternate to focus distance. For example, the apparatus 200 may be configured with means (e.g., processor 202) to determine the representation based on a representational distance associated with the data. The representational distance is, for instance, the distance in the field of view or scene where the representation 107 should be presented. For example, in an example where the representation 107 augments a real world object viewable in the display 101, the representational distance might correspond to the distance of the object. Based on this representational distance, the apparatus 200 may be configured with means (e.g., processor 202) to apply various rendering characteristics that are a function (e.g., linear or non-linear) of the representational distance.

In at least one example embodiment, the display 101 is configured with means (e.g., dynamic focus optical components 121a and 121b) to optically adjust focus or focal point settings. In these embodiments, the apparatus 200 may be configured with means (e.g., processor 202) determine the representations 107 based, at least in part, on the focal points settings of the dynamic focus optical components. For example, if a blurring effect is already created by the optical focal point settings, the representations need not include as much, if any, blurring effect when compared to displays 101 without dynamic focus optical components. In other cases, the representations 107 may be determined with additional effects to add or enhance, for instance, depth or focus effects on the display 101.

In at least one example embodiment, the apparatus 200 may be configured with means (e.g., processor 202) to determine a difference of the representational distance from the focus distance. In other words, the visual appearance of the representation 107 may depend on the how far (e.g., in either the foreground or the background) the representational distance is from the determined focus distance. In this way, the apparatus 200 may be configured with means (e.g., processor 202) to determine a degree of at least one rendering characteristics to apply to the representation 107 based on the representational distance from the focus distance. For example, the rendering characteristics may include blurring, shadowing, vergence (e.g., for binocular displays), and the like. Representations 107 that are farther away from the focus distance may be rendered with more blur, or left/right images for a binocular display may be rendered with vergence settings appropriate for the distance. It is contemplated that any type of rendering characteristics (e.g., color, saturation, size, etc.) may be varied based on the representational distance.

After determining the representation 107, the apparatus 200 performs and is configured with means (e.g., processor 202, display 214) to cause a presentation of the representation 107 on a display (operation 305). Although various embodiments of the method, apparatus, and computer program product described herein are discussed with respect to a binocular head-worn see-through display, it is contemplated that the various embodiments are applicable to presenting representation 107 on any type of display where visual miscues can occur. For example, other displays include, monocular displays where only one eye may suffer from accommodation mismatches, and the like. In addition, the various embodiments may apply to displays of completely virtual information (e.g., with no live view).

As shown in operation 307, the apparatus 200 can perform and be configured with means (e.g., processor 202, camera/sensors 294) to determine a change in the focus distance and then to cause an updating of the representation based on the change. In at least one example embodiment, the apparatus 200 may monitor the focus distance for change in substantially real-time, continuously, periodically, according to a schedule, on demand, etc. In this way, as a user changes his/her gaze or focus, the apparatus 200 can dynamically adjust the representations 107 to match with the new focus distance.

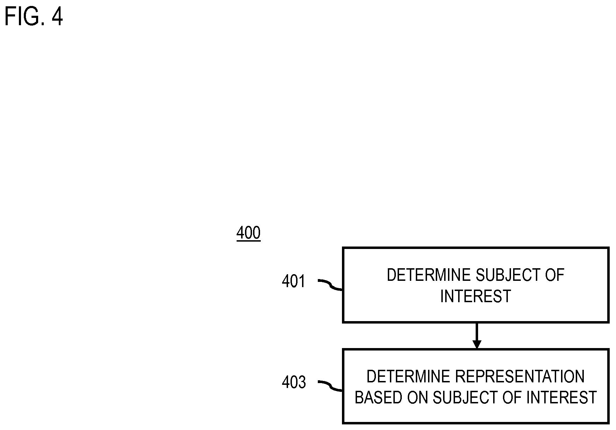

FIG. 4 is a block diagram of operations for determining representations of displayed information based on determining a subject of interest, according to at least one example embodiment of the present disclosure. In at least one example embodiment, the apparatus 200 and/or its components (e.g., processor 202, display 214, camera/sensors 294) of FIG. 2 perform and/or provide means for performing any of the operations described in the process 400 of FIG. 4. In addition or alternatively, a chip set including a processor and a memory as shown in FIG. 8 and/or a mobile terminal as shown in FIG. 9 may include means for performing any of the operations of the process 400.

As shown in operation 401, the apparatus 200 may perform and be configured with means (e.g., processor 202, camera/sensors 294) to determine a subject of interest within a user's field of view on a display 101 (e.g., what information or object presented in the display 101 is of interest to the user). Similar to determining the focus distance, gaze tracking or user interactions/inputs may be used to determine the subject of interest. In at least one example embodiment, the apparatus 200 may be configured with means (e.g., processor 202, camera/sensors 294) to determine the subject of interest based on whether the user is looking at a representation 107. In at least one example embodiment, where multiple representations 107, information, or objects are perceived at the approximately the same focus distance, the apparatus 200 may further determine which item in the focal plane has the user's interest (e.g., depending on the accuracy of the gaze tracking or user interaction information).

In operation 403, the apparatus 200 may perform and be configured with means (e.g., processor 202) to determine the representation based on the subject of interest. For example, when the user looks at a representation 107, the representation 107 may have one appearance (e.g., bright and in focus). In a scenario where the user looks away from the representation 107 to another item in the same focal plane, the representation may have another appearance (e.g., dark and in focus). In a scenario where the user looks away from the representation 107 to another item in a different focal plane or distance, the representation may have yet another appearance (e.g., dark and out of focus).

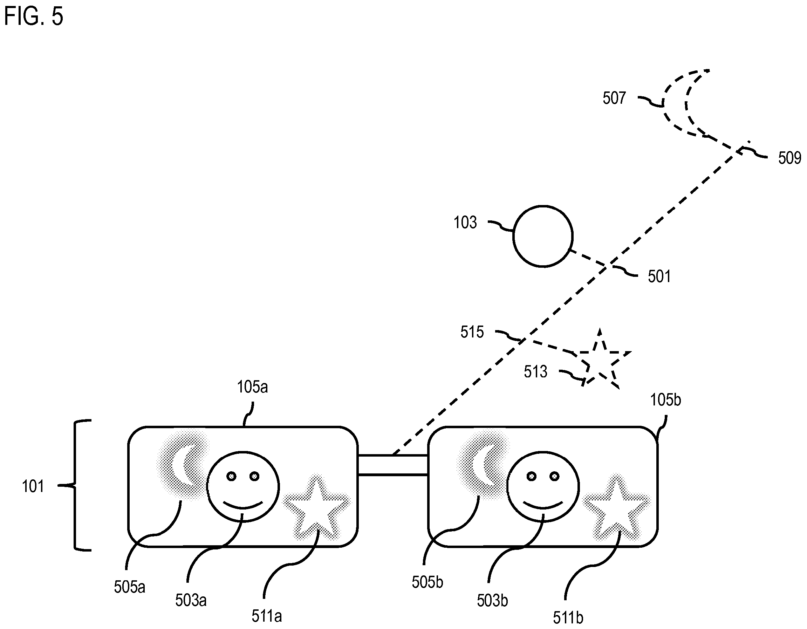

FIG. 5 is a user's view through a display, according to at least one example embodiment of the present disclosure. In at least one example embodiment, the apparatus 200 may include means for determining the representations 107 of data to present the display 101 based on the focus distance of the user. As shown, a user is viewing an object 103 through the display 101, which is a see-through binocular display comprising a subdisplay 105a corresponding to the left lens of the display 101 and a subdisplay 105b corresponding to the right lens of the display 101. Accordingly, the apparatus may include means (e.g., processor 202, display 214) for generating a binocular user interface presented in the display 101.

In this example, the apparatus 200 has determined the focus distance of the user as focus distance 501 corresponding to the object 103. As described with respect to FIG. 1A, the apparatus 200 has presented augmenting representations 503a and 503b for each respective subdisplay 105a and 105b as overlays on the object 103 at the determined focus distance 501. As shown, the apparatus 200 is also presenting representations 505a and 505b of a virtual object 507 located at a representational distance 509, representations 511a and 511b of a virtual object 513 location at a representational distance 515.

As illustrated in FIG. 5, the difference between the representational distance 509 of virtual object 507 from the focus distance 501 is greater than the difference between the representational distance 515 of the virtual object 513 from the focus distance 501. Accordingly, the apparatus 200 is configured with means (e.g., processor 202) to determine the representations 505a and 505b of the virtual object 507 to have more blurring effect than the representations 511a and 511b of the virtual object 513. In addition, because of the binocular display the representations 503a-503b, 505a-505b, and 51la-51 lb are determined so that vergence of each representation pair is appropriate for the determined focus distance. In at least one example embodiment, the apparatus 200 may determine the blurring effect and vergence separately or in combination for the representations.

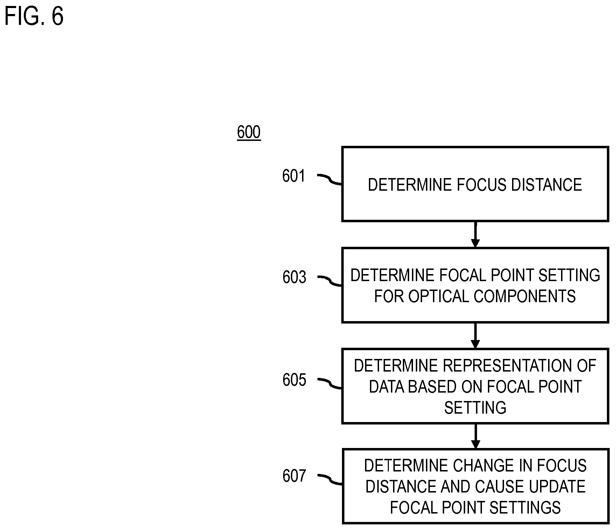

FIG. 6 is a block diagram of operations for determining focal point settings for dynamic focus optical components of display, according to at least one example embodiment of the present disclosure. In at least one example embodiment, the apparatus 200 and/or its components (e.g., processor 202, display 214, camera/sensors 294) of FIG. 2 perform and/or provide means for performing any of the operations described in the process 600 of FIG. 6. In addition or alternatively, a chip set including a processor and a memory as shown in FIG. 8 and/or a mobile terminal as shown in FIG. 9 may include means for performing any of the operations of the process 600. It also is noted that the operations 601-607 of FIG. 6 are provided as examples of at least one embodiment of the present disclosure.

As noted previously, potential visual miscues and conflicts (e.g., focus mismatches) and/or their potential impacts on the user can be reduced or eliminated by optical and/or non optical techniques. The method, apparatus, and computer program product for performing the operations of the process 600 relate to optical techniques for determining focal point settings for dynamic focus optical components 121 of a display 101 to reduce or eliminate visual miscues or conflicts. Operation 601 is analogous to the focus distance determination operations described with respect to operation 301 of FIG. 3. For example, in operation 601, the apparatus 200 performs and includes means (e.g., a processor 202, camera/sensors 294, input device 212, pointing device 216, etc.) for determining a focus distance of a user. By way of example, the focus distance represents the distance to a point in a display's (e.g., displays 101, 119, 125, and/or 214) field of view that is the subject of the user's attention.

In at least one example embodiment, the point in the field of view and the focus distance are determined using gaze tracking information. Accordingly, the apparatus 200 may be configured with means (e.g., camera/sensors 294) to determine the point of attention by tracking the gaze of the user and to determine the focus distance based on the gaze tracking information. In at least one example embodiment, the apparatus 200 is configured with means (e.g., processor 202, memory 204, camera/sensors 294) to maintain a depth buffer of information, data and/or objects (e.g., both physical and virtual) present in at least one scene within a field of view of a display 101. For example, the apparatus 200 may include means such as a forward facing depth sensing camera to create the depth buffer. The depth sensing camera or other similar sensors are, for instance, means for determining a depth, a geometry or a combination thereof of the representations 107 and the information, objects, etc. viewed through display 101. For example, the depth buffer can store z-axis values for pixels or points identified in the field of view of the display 101.

The depth and geometry information can be stored in the depth buffer or otherwise associated with the depth buffer. In this way, the gaze tracking information, for instance, can be matched against the depth buffer to determine the focus distance. In at least one example embodiment, the apparatus can be configured with means (e.g., processor 202, memory 204, storage device 208) to store the depth buffer locally at the apparatus 200. In addition or alternatively, the apparatus 200 may be configured to include means (e.g., communication interface 270) to store the depth buffer and related information remotely in, for instance, the server 292, host 282, etc.

In at least one example embodiment, the apparatus 200 may be configured with means (e.g., processor 202, input device 212, pointing device 216, camera/sensors 294) to determine the point in the display's field of view that is of interest to the user based on user interaction, input, and/or sensed contextual information. For example, in addition to or instead of the gaze tracking information, the apparatus 200 may determine what point in the field of view is selected (e.g., via input device 212, pointing device 216) by the user. In another example, the apparatus 200 may process sensed contextual information (e.g., accelerometer data, compass data, gyroscope data, etc.) to determine a direction or mode of movement for indicating a point of attention. This point can then be compared against the depth buffer to determine a focus distance.

In operation 603, the apparatus 200 may perform and be configured with means (e.g., processor 202) for determining at least one focal point setting for one or more dynamic focus optical components 121 of the display 101 based on the focus distance. In at least one example embodiment, the parameters associated with the at least one focal point setting may depend on the type of dynamic focusing system employed by the display 101. As described with respect to FIG. 1C, one type of dynamic focus optical component is a continuous focus system based on technologies such as fluidics or electrooptics. For fluidics-based system, the apparatus 200 may be configured with means (e.g., processor 202) to determine parameters or focal point settings associated with fluid inflation or deflation to achieve a desired focal point. For electrooptics based system, the apparatus 200 may be configured to include means (e.g., processor 202) for determining parameters for creating an electric field to alter the optical properties of the electrooptics system.

FIG. 1D describes a dynamic focusing system based on a display with multiple focal planes. For this type of system, the apparatus 200 may be configured to include means (e.g., processor 202) determine focal point settings to indicate which of the focal planes has a focal point most similar to the determined focus distance. It is contemplated that the discussion of the above optical systems is for illustration and not intended to restrict the dynamic focusing systems to which the various embodiments of the method, apparatus, and computer program product apply.

In at least one example embodiment, the apparatus 200 may be configured with means (e.g., processor 202, camera/sensors 294) to determine the at least one focal point setting based on a focus mismatch between representations 107 of data presented on the display 101 and information view through the display 101. By way of example, the apparatus 200 determines a depth for presenting a representation 107 on the display 101 and another depth for viewing information through the display. Based on these two depths, the apparatus 200 can determine whether there is a potential focus mismatch or other visual miscue and then determine the at least one focal point setting to cause a correction of the focus mismatch.

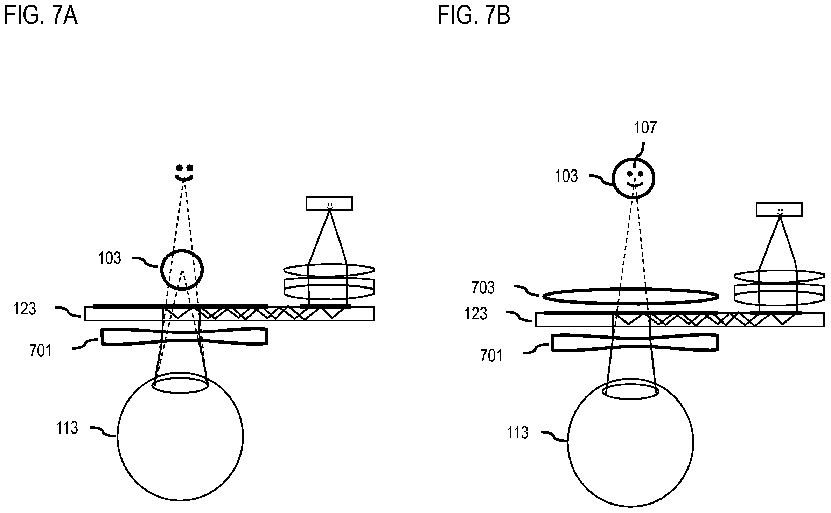

In at least one example embodiment, wherein the display 101 includes at least two dynamic focus optical components 121, the apparatus 200 may be configured with means (e.g., processor 202, camera/sensors 294) to determine a focus mismatch by determining a deviation of the perceived depth of the representation, the information viewed through the display, or a combination thereof resulting from a first set of the focal points settings configured on one of the dynamic focus optical components 121. The apparatus 200 can then determine another set of focal point settings for the other dynamic focus optical component 121 based on the deviation. For instance, the second or other set of focal point settings can be applied to the second or other dynamic focus optical elements to correct any deviations or miscues between representations 107 presented in the display 101 and information viewed through the display. Additional discussion of the process of focus correction using optical components is provided below with respect to FIGs. 7A-7D.

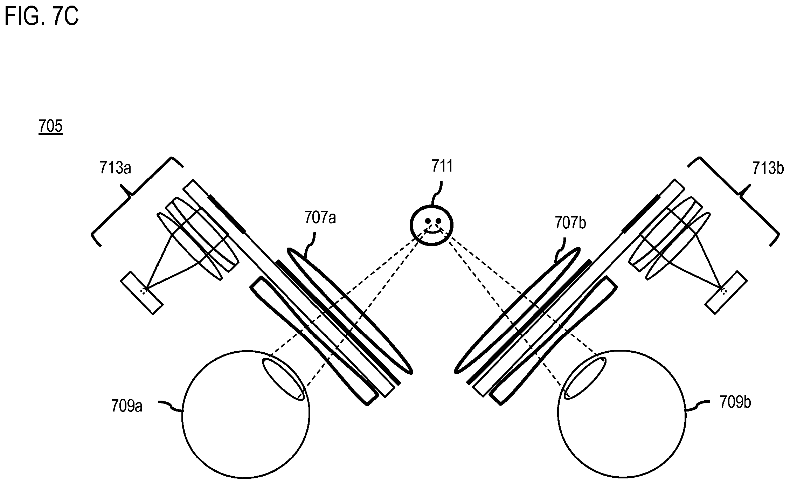

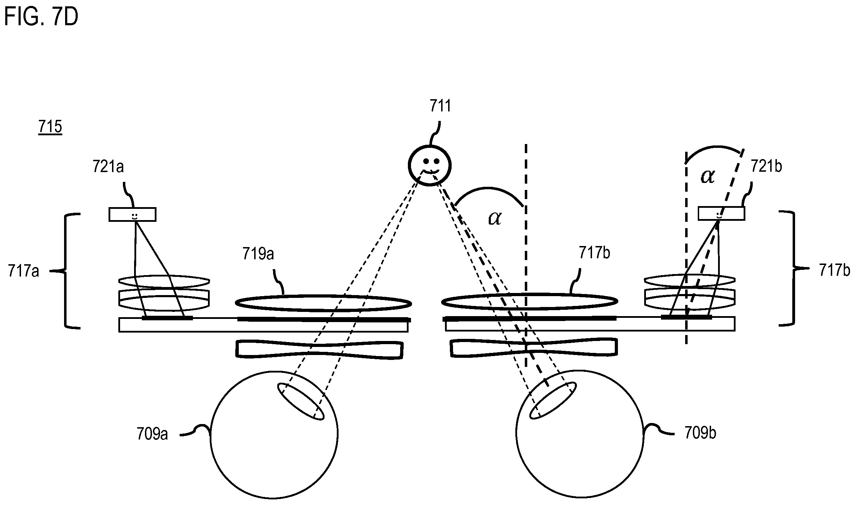

In at least one example embodiment, in addition to optical focus adjustments, the apparatus may be configured with means (e.g., processor 202) for determining at least one vergence setting for the one or more dynamic focus optical components based on the focus distance. In at least one example embodiment, vergence refers to the process of rotating of the eyes around a vertical axis to provide for binocular vision. For example, objects closer to the eyes typically require greater inward rotation of the eyes, whereas for objects that are farther out towards infinity, the eyes are more parallel. Accordingly, the apparatus 200 may determine how to physically configure the dynamic focus optical components 121 to approximate the appropriate level of vergence for a given focus distance. In at least one example embodiment, the at least one vergence setting includes a tilt setting for the one or more dynamic focus optical elements. An illustration of the tilt vergence setting for binocular optical components is provided with respect to FIGs. 7C and 7D below. Enabling adjustment of focus and vergence settings as described in the various embodiments enables the apparatus 200 to reduce or eliminate potential visual miscues that can lead to eye fatigue.

In at least one example embodiment, the apparatus 200 can be configured with means (e.g., processor 202, camera/sensors 294) to combine use of both optical and non-optical techniques for determining focus or other visual miscue correction. Accordingly, in operation 605, the apparatus 200 may perform and be configured with means (e.g., processor 202) to determine a representation 107 based, at least in part, on the focal points settings of the dynamic focus optical components (operation 603). For example, if a blurring effect is already created by the optical focal point settings, the representations need not include as much, if any, blurring effect when compared to displays 101 without dynamic focus optical components. In other cases, the representations 107 may be determined with additional effects to add or enhance, for instance, depth or focus effects on the display 101 with a given focal point setting.

As shown in operation 607, the apparatus 200 can perform and be configured with means (e.g., processor 202, camera/sensors 294) to determine a change in the focus distance and then to cause an updating of the at least one focal point settings for the dynamic focus optical components 121 based on the change. In at least one example embodiment, the apparatus 200 may monitor the focus distance for change in substantially real-time, continuously, periodically, according to a schedule, on demand, etc. In this way, as a user changes his/her gaze or focus, the apparatus 200 can dynamically adjust the focus of the optical components to match with the new focus distance.

FIGs. 7A-7D are perspective views of a display providing focus correction using dynamic focus optical components, according to at least one example embodiment of the present disclosure. As discussed with respect to FIG. 1B above, a typical near-eye see-through display 101 presents representations 107 (e.g., a virtual image) of data over a physical world view at a fixed focus. This can lead to a focus mismatch between the representations 107 which are typically fixed at focus distance of infinity and real objects or information viewed through display. As shown in FIG. 7A, in at least one example embodiment, a lens 701 is provided between the eye 113 and the lightguide 123. By way of example, the single lens 701 has the effect of bringing the virtual image (e.g., the representation 107) closer. In the example that is not claimed of a display 101 that is not see-through, a single lens can effectively change the focus distance of the virtual images or representations 107 presented on the display.

However, in the case of a see-through display 101, the perceived depth of the image of the object 103 viewed through the display is also brought closer, therefore maintaining a potential focus mismatch. In the embodiment of FIG. 7B, a second lens 703 is positioned between the lightguide 123 and the object 103 to effectively move the perceived depth of the object 103 to its actual depth. Accordingly, a single lens can be effective in changing a focus distance of representations 107 or images on the display 101 when the display is opaque or non-see-through. On the other hand, a dual lens system can be effective in correcting visual miscues and focus mismatches when the display 101 presents real objects (e.g., object 103) mixed with virtual objects (e.g., representations 107).

In at least one example embodiment, when the dual lens system of FIG. 7B is configured with dynamic focus optical components 121 as lenses, the system can offer greater flexibility in mixing virtual images with information viewed through the display. As discussed with respect to operation 607 of FIG. 6, the focal point settings of the two lenses can be adjusted to reconcile focus mismatches. For example, the focal point settings of the first lens 701 can be adjusted to present representations 107 of data at a focus distance determined by the user. Then a deviation of the perceived depth of information viewed through the display 101 can be used to determine the focal point settings of the second lens 703. In at least one example embodiment, the focal point settings of the second lens 703 is determined so that it will correct any deviation of the perceived distance to move the perceived distance to the intended or actual depth of the information when viewed through the display 101.

FIG. 7C depicts a binocular display 705 that includes dynamic focus optical elements 707a and 707b corresponding to the left and right eyes 709a and 709b of a user, according to at least one example embodiment. In addition to accommodation or focus conflicts, vergence can affect eye fatigue when not aligned with an appropriate focus distance. In at least one example embodiment, the dynamic focus optical elements 707a and 707b are means for optically adjusting convergence. As shown in FIG. 7C, when viewing an object 711 (particularly when the object 711 is close to the display 705), the eyes 709a and 709b typically have to rotate inwards to bring the object 711 within the visual area (e.g., the foveal area) of the retinas and provide for a coherent binocular view of the object 711. In the example of FIG. 7C, the subdisplays 713a and 713b that house the respective dynamic focus optical elements 707a and 707b include means for physically rotating in order to adjust for convergence.

FIG. 7D depicts a binocular display 715 that can adjust for convergence by changing an angle at which light is projected onto the subdisplays 717a and 717b housing respective dynamic focus elements 719a and 719b, according to at least one example embodiment. For example, instead of physically rotating the subdisplays 717a and 717b, the display 715 may include means for determining an angle α that represents the angle the eyes 709a and 709b should be rotated inwards to converge on the object 711. The display 715 then may include means (e.g., rendering engines 721a and 721b) to alter the angle of light projected into the subdisplays 717a and 717b to match the angle α. In this way, the subdisplays 717a and 717b need not physically rotate as described with respect to FIG. 7C above.

FIG. 8 illustrates a chip set or chip 900 upon which an embodiment of the disclosure may be implemented. Chip set 900 is programmed to determine representations of displayed information based on focus distance as described herein and includes, for instance, the processor and memory components described with respect to FIG. 2 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in at least one example embodiment, the chip set 900 can be implemented in a single chip. It is further contemplated that in at least one example embodiment, the chip set or chip 900 can be implemented as a single "system on a chip." It is further contemplated that in at least one example embodiment, a separate ASIC would not be used, for example, and that all relevant functions as disclosed herein would be performed by a processor or processors. Chip set or chip 900, or a portion thereof, constitutes a means for performing one or more steps of providing user interface navigation information associated with the availability of functions. Chip set or chip 900, or a portion thereof, constitutes a means for performing one or more steps of determining representations of displayed information based on focus distance.

In at least one example embodiment, the chip set or chip 800 includes a communication mechanism such as a bus 901 for passing information among the components of the chip set 800. A processor 903 has connectivity to the bus 901 to execute instructions and process information stored in, for example, a memory 905. The processor 903 may include one or more processing cores with each core configured to perform independently. A multi-core processor enables multiprocessing within a single physical package. Examples of a multi-core processor include two, four, eight, or greater numbers of processing cores. Alternatively or in addition, the processor 903 may include one or more microprocessors configured in tandem via the bus 901 to enable independent execution of instructions, pipelining, and multithreading. The processor 903 may also be accompanied with one or more specialized components to perform certain processing functions and tasks such as one or more digital signal processors (DSP) 907, or one or more application-specific integrated circuits (ASIC) 909. A DSP 907 typically is configured to process real-world signals (e.g., sound) in real time independently of the processor 903. Similarly, an ASIC 909 can be configured to performed specialized functions not easily performed by a more general purpose processor. Other specialized components to aid in performing the inventive functions described herein may include one or more field programmable gate arrays (FPGA), one or more controllers, or one or more other special-purpose computer chips.

In at least one example embodiment, the chip set or chip 900 includes merely one or more processors and some software and/or firmware supporting and/or relating to and/or for the one or more processors.

The processor 903 and accompanying components have connectivity to the memory 905 via the bus 901. The memory 905 includes both dynamic memory (e.g., RAM, magnetic disk, writable optical disk, etc.) and static memory (e.g., ROM, CD-ROM, etc.) for storing executable instructions that when executed perform the inventive steps described herein to determine representations of displayed information based on focus distance. The memory 905 also stores the data associated with or generated by the execution of the inventive steps.

FIG. 9 is a diagram of exemplary components of a mobile terminal (e.g., handset) for communications, which is capable of operating in the system of FIG. 1, according to at least one example embodiment. In at least one example embodiment, mobile terminal 1001, or a portion thereof, constitutes a means for performing one or more steps of determining representations of displayed information based on focus distance. Generally, a radio receiver is often defined in terms of front-end and back-end characteristics. The front-end of the receiver encompasses all of the Radio Frequency (RF) circuitry whereas the back-end encompasses all of the base-band processing circuitry. As used in this application, the term "circuitry" refers to both: (1) hardware-only implementations (such as implementations in only analog and/or digital circuitry), and (2) to combinations of circuitry and software (and/or firmware) (such as, if applicable to the particular context, to a combination of processor(s), including digital signal processor(s), software, and memory(ies) that work together to cause an apparatus, such as a mobile phone or server, to perform various functions). This definition of "circuitry" applies to all uses of this term in this application, including in any claims. As a further example, as used in this application and if applicable to the particular context, the term "circuitry" would also cover an implementation of merely a processor (or multiple processors) and its (or their) accompanying software/or firmware. The term "circuitry" would also cover if applicable to the particular context, for example, a baseband integrated circuit or applications processor integrated circuit in a mobile phone or a similar integrated circuit in a cellular network device or other network devices.

Pertinent internal components of the telephone include a Main Control Unit (MCU) 1003, a Digital Signal Processor (DSP) 1005, and a receiver/transmitter unit including a microphone gain control unit and a speaker gain control unit. A main display unit 907 provides a display to the user in support of various applications and mobile terminal functions that perform or support the steps of determining representations of displayed information based on focus distance. The display 1007 includes display circuitry configured to display at least a portion of a user interface of the mobile terminal (e.g., mobile telephone). Additionally, the display 1007 and display circuitry are configured to facilitate user control of at least some functions of the mobile terminal. An audio function circuitry 1009 includes a microphone 1011 and microphone amplifier that amplifies the speech signal output from the microphone 1011. The amplified speech signal output from the microphone 1011 is fed to a coder/decoder (CODEC) 1013.

A radio section 1015 amplifies power and converts frequency in order to communicate with a base station, which is included in a mobile communication system, via antenna 1017. The power amplifier (PA) 1019 and the transmitter/modulation circuitry are operationally responsive to the MCU 1003, with an output from the PA 1019 coupled to the duplexer 1021 or circulator or antenna switch, as known in the art. The PA 1019 also couples to a battery interface and power control unit 1020.

In use, a user of mobile terminal 1001 speaks into the microphone 1011 and his or her voice along with any detected background noise is converted into an analog voltage. The analog voltage is then converted into a digital signal through the Analog to Digital Converter (ADC) 1023. The control unit 1003 routes the digital signal into the DSP 1005 for processing therein, such as speech encoding, channel encoding, encrypting, and interleaving. In at least one example embodiment, the processed voice signals are encoded, by units not separately shown, using a cellular transmission protocol such as enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wideband code division multiple access (WCDMA), wireless fidelity (WiFi), satellite, and the like, or any combination thereof.

The encoded signals are then routed to an equalizer 1025 for compensation of any frequency-dependent impairments that occur during transmission though the air such as phase and amplitude distortion. After equalizing the bit stream, the modulator 1027 combines the signal with a RF signal generated in the RF interface 1029. The modulator 1027 generates a sine wave by way of frequency or phase modulation. In order to prepare the signal for transmission, an up converter 1031 combines the sine wave output from the modulator 1027 with another sine wave generated by a synthesizer 1033 to achieve the desired frequency of transmission. The signal is then sent through a PA 1019 to increase the signal to an appropriate power level. In practical systems, the PA 1019 acts as a variable gain amplifier whose gain is controlled by the DSP 1005 from information received from a network base station. The signal is then filtered within the duplexer 1021 and optionally sent to an antenna coupler 1035 to match impedances to provide maximum power transfer. Finally, the signal is transmitted via antenna 1017 to a local base station. An automatic gain control (AGC) can be supplied to control the gain of the final stages of the receiver. The signals may be forwarded from there to a remote telephone which may be another cellular telephone, any other mobile phone or a land-line connected to a Public Switched Telephone Network (PSTN), or other telephony networks.

Voice signals transmitted to the mobile terminal 1001 are received via antenna 1017 and immediately amplified by a low noise amplifier (LNA) 1037. A down-converter 1039 lowers the carrier frequency while the demodulator 1041 strips away the RF leaving only a digital bit stream. The signal then goes through the equalizer 1025 and is processed by the DSP 1005. A Digital to Analog Converter (DAC) 1043 converts the signal and the resulting output is transmitted to the user through the speaker 1045, all under control of a Main Control Unit (MCU) 1003 which can be implemented as a Central Processing Unit (CPU).

The MCU 1003 receives various signals including input signals from the keyboard 1047. The keyboard 1047 and/or the MCU 1003 in combination with other user input components (e.g., the microphone 1011) comprise a user interface circuitry for managing user input. The MCU 1003 runs a user interface software to facilitate user control of at least some functions of the mobile terminal 1001 to determine representations of displayed information based on focus distance. The MCU 1003 also delivers a display command and a switch command to the display 1007 and to the speech output switching controller, respectively. Further, the MCU 1003 exchanges information with the DSP 1005 and can access an optionally incorporated SIM card 1049 and a memory 1051. In addition, the MCU 1003 executes various control functions required of the terminal. The DSP 1005 may, depending upon the implementation, perform any of a variety of conventional digital processing functions on the voice signals. Additionally, DSP 1005 determines the background noise level of the local environment from the signals detected by microphone 1011 and sets the gain of microphone 1011 to a level selected to compensate for the natural tendency of the user of the mobile terminal 1001.

The CODEC 1013 includes the ADC 1023 and DAC 1043. The memory 1051 stores various data including call incoming tone data and is capable of storing other data including music data received via, e.g., the global Internet. The software module could reside in RAM memory, flash memory, registers, or any other form of writable storage medium known in the art. The memory device 1051 may be, but not limited to, a single memory, CD, DVD, ROM, RAM, EEPROM, optical storage, magnetic disk storage, flash memory storage, or any other non-volatile storage medium capable of storing digital data.

An optionally incorporated SIM card 1049 carries, for instance, important information, such as the cellular phone number, the carrier supplying service, subscription details, and security information. The SIM card 1049 serves primarily to identify the mobile terminal 1001 on a radio network. The card 1049 also contains a memory for storing a personal telephone number registry, text messages, and user specific mobile terminal settings.

Further, one or more camera sensors 1053 may be incorporated onto the mobile station 1001 wherein the one or more camera sensors may be placed at one or more locations on the mobile station. Generally, the camera sensors may be utilized to capture, record, and cause to store one or more still and/or moving images (e.g., videos, movies, etc.) which also may comprise audio recordings.

Although features of the disclosure are expressed in certain combinations among the claims, it is contemplated that these features can be arranged in any combination and order.

## Claims

1. An apparatus comprising:
a see-through display (105a; 105b; 119; 713a; 713b; 717a; 717b);
a first optical component (121a; 701);
and a second optical component (121b; 703); wherein each of the first optical component and the second optical component is a dynamic focus component whose focal point settings can be dynamically changed to alter their focus; and the apparatus further comprises
at least one processor and at least one memory configured to:
determine a focus distance of a user, wherein the focus distance corresponds with a distance of the object from the see-through display to a point in the user's field of view through the see-through display that is a point of attention of the user, wherein an object (103) is at the point of attention;
determine a representation (107; 507; 513) of data;
cause presentation of the representation on the see-through display;
adjust focus of the first optical component that is positioned between the see-through display and the user such that a focus distance of the representation (111; 509; 515) is reduced; and
adjust focus of the second optical component that is positioned between the see-through display and the object such that a perceived distance of the object moves to the actual distance of the object from the see-through display when viewed through the see-through display, and such that the representation is presented as overlaid on the object;
**characterised in that**
at least one of the optical components comprises a fluidics-based dynamic focus component; and/or
wherein at least one of the optical components comprises a lens-system with focusing capability based on piezoelectric movement of at least one lens.

2. The apparatus of claim 1, wherein determining the focus distance of the user is based on gaze tracking information.

3. The apparatus of claim 1 or 2, further comprising:
means (202, 204, 206; 903, 905) configured to determine a change in the focus distance of the user;
and
means (202, 204, 206; 903, 905) configured to cause an updating of the representation based on the change.

4. The apparatus of any of the preceding claims, further comprising:
means (202, 204, 206; 903, 905) configured to determine the point of attention based on gaze tracking information or user interactions/inputs.

5. The apparatus of any of the preceding claims,
further comprising means (202, 204, 206; 903, 905) configured to cause rotation of the see-through display in order to adjust for convergence; or
further comprising means (202, 204, 206; 903, 905) configured to cause projection of light onto the see-through display and means (202, 204, 206; 903, 905) configured to alter the angle of light projected onto the see-through display in order to adjust for convergence.

6. The apparatus of any of the preceding claims , wherein the see-through display comprises a light guide.

7. The apparatus of any of the preceding claims, wherein the focus of the second optical component is configured to correct the effect of the focus of the first optical component on the perceived distance of the object.

8. The apparatus of any of the preceding claims, wherein the apparatus comprises an antenna, a microphone, a compass, a GPS location receiver, a battery interface and/or a power control unit.

9. The apparatus of any of the preceding claims, wherein a mobile terminal (901) comprises the apparatus.

10. A method, performed by the apparatus of any of the preceding claims, the method comprising:
determining a focus distance of a user, wherein the focus distance corresponds with a distance from a see-through display (105a; 105b; 119; 713a; 713b; 717a; 717b) to a point in the user's field of view through the see-through display that is a point of attention of the user, wherein an object (103) is at the point of attention;
determining a representation (107; 507; 513) of data;
causing a presentation of the representation on the see-through display;
adjusting focus of a first optical component (121a; 701) that is positioned between the see-through display and the user such that a focus distance of the representation (111; 509; 515) is reduced; and
adjusting focus of a second optical component (121b; 703) that is positioned between the see-through display and the object such that a perceived distance of the object moves to the actual distance of the object from the see-through display when viewed through the see-through display, and such that the representation is presented as overlaid on the object;
wherein at least one of the optical components comprises a fluidics-based dynamic focus component; and/or
wherein at least one of the optical components comprises a lens-system with focusing capability based on piezoelectric movement of at least one lens.

11. The method of claim 10, further comprising:
determining the focus distance of the user based on gaze tracking information.

12. The method of claim 10 or 11, further comprising:
determining a change in the focus distance of the user; and
causing an updating of the representation based on the change.

13. The method of any of claims 10, 11 or 12, further comprising:
determining the point of attention based on gaze tracking information or user interactions/inputs.

14. Computer program instructions for causing the apparatus (200; 900) of any of claims 1 to 9 to perform at least the method steps of claim 10.

15. The computer program instructions of claim 14, further comprising computer program instructions for causing an apparatus (200; 900) to perform at least:
determining a change in the focus distance of the user; and
causing an updating of the representation based on the change.

## Patentansprüche

1. Vorrichtung, die Folgendes umfasst:
eine durchsichtige Anzeige (105a; 105b; 119; 713a; 713b; 717a; 717b);
eine erste optische Komponente (121a; 701);
und eine zweite optische Komponente (121b; 703);
wobei jede der ersten optischen Komponente und der zweiten optischen Komponente eine Komponente mit dynamischem Fokus ist, deren Brennpunkteinstellungen dynamisch geändert werden können, um deren Fokus zu ändern; und die Vorrichtung ferner Folgendes umfasst
mindestens einen Prozessor und mindestens einen Speicher, die zu Folgendem ausgelegt sind:
Bestimmen eines Fokusabstands eines Benutzers, wobei der Fokusabstand einem Abstand des Objekts von der durchsichtigen Anzeige zu einem Punkt im Sichtfeld des Benutzers durch die durchsichtige Anzeige entspricht, bei dem es sich um einen Punkt der Aufmerksamkeit des Benutzers handelt, wobei sich am Punkt der Aufmerksamkeit ein Objekt (103) befindet;
Bestimmen einer Repräsentation (107; 507; 513) von Daten;
Veranlassen einer Präsentation der Repräsentation auf der durchsichtigen Anzeige;
Anpassen des Fokus der ersten optischen Komponente, die zwischen der durchsichtigen Anzeige und dem Benutzer positioniert ist, derart, dass ein Fokusabstand der Repräsentation (111; 509; 515) reduziert ist; und
Anpassen des Fokus der zweiten optischen Komponente, die zwischen der durchsichtigen Anzeige und dem Objekt positioniert ist, derart, dass sich ein wahrgenommener Abstand des Objekts bei Betrachtung durch die durchsichtige Anzeige zum tatsächlichen Abstand des Objekts zur durchsichtigen Anzeige bewegt, und derart, dass die Repräsentation auf dem Objekt überlagert präsentiert wird;
**dadurch gekennzeichnet, dass**
mindestens eine der optischen Komponenten eine fluidikbasierte Komponente mit dynamischem Fokus umfasst; und/oder
wobei mindestens eine der optischen Komponenten ein Linsensystem mit einer Fokussierfähigkeit auf Basis einer piezoelektrischen Bewegung von mindestens einer Linse umfasst.

2. Vorrichtung nach Anspruch 1, wobei das Bestimmen des Fokusabstands des Benutzers auf Blickverfolgungsinformationen basiert.

3. Vorrichtung nach Anspruch 1 oder 2, die ferner Folgendes umfasst:
Mittel (202, 204, 206; 903, 905), die dazu ausgelegt sind, eine Änderung des Fokusabstands des Benutzers zu bestimmen; und
Mittel (202, 204, 206; 903, 905), die dazu ausgelegt sind, eine Aktualisierung der Repräsentation auf Basis der Änderung zu veranlassen.

4. Vorrichtung nach einem der vorhergehenden Ansprüche, die ferner Folgendes umfasst:
Mittel (202, 204, 206; 903, 905), die dazu ausgelegt sind, den Punkt der Aufmerksamkeit auf Basis von Blickverfolgungsinformationen oder Benutzerinteraktionen/- eingaben zu bestimmen.

5. Vorrichtung nach einem der vorhergehenden Ansprüche,
die ferner Mittel (202, 204, 206; 903, 905) umfasst, die dazu ausgelegt sind, zum Anpassen für eine Konvergenz eine Drehung der durchsichtigen Anzeige zu veranlassen; oder
die ferner Mittel (202, 204, 206; 903, 905) umfasst, die dazu ausgelegt sind, eine Projektion von Licht auf die durchsichtige Anzeige zu veranlassen, und Mittel (202, 204, 206; 903, 905), die dazu ausgelegt sind, zum Anpassen für eine Konvergenz den Winkel von Licht, das auf die durchsichtige Anzeige projiziert wird, zu ändern.

6. Vorrichtung nach einem der vorhergehenden Ansprüche, wobei die durchsichtige Anzeige einen Lichtleiter umfasst.

7. Vorrichtung nach einem der vorhergehenden Ansprüche, wobei der Fokus der zweiten optischen Komponente dazu ausgelegt ist, den Effekt des Fokus der ersten optischen Komponente auf den wahrgenommenen Abstand des Objekts zu korrigieren.

8. Vorrichtung nach einem der vorhergehenden Ansprüche, wobei die Vorrichtung eine Antenne, ein Mikrofon, einen Kompass, einen GPS-Standortempfänger, eine Batterieschnittstelle und/oder eine Stromsteuereinheit umfasst.

9. Vorrichtung nach einem der vorhergehenden Ansprüche, wobei die Vorrichtung in einem mobilen Endgerät (901) umfasst ist.

10. Verfahren, das von der Vorrichtung nach einem der vorhergehenden Ansprüche durchgeführt wird, wobei das Verfahren Folgendes umfasst:
Bestimmen eines Fokusabstands eines Benutzers, wobei der Fokusabstand einem Abstand von einer durchsichtigen Anzeige (105a; 105b; 119; 713a; 713b; 717a; 717b) zu einem Punkt im Sichtfeld des Benutzers durch die durchsichtige Anzeige entspricht, bei dem es sich um einen Punkt der Aufmerksamkeit des Benutzers handelt, wobei sich am Punkt der Aufmerksamkeit ein Objekt (103) befindet;
Bestimmen einer Repräsentation (107; 507; 513) von Daten;
Veranlassen einer Präsentation der Repräsentation auf der durchsichtigen Anzeige;
Anpassen des Fokus einer ersten optischen Komponente (121a; 701), die zwischen der durchsichtigen Anzeige und dem Benutzer positioniert ist, derart, dass ein Fokusabstand der Repräsentation (111; 509; 515) reduziert ist; und
Anpassen des Fokus einer zweiten optischen Komponente (121b; 703), die zwischen der durchsichtigen Anzeige und dem Objekt positioniert ist, derart, dass sich ein wahrgenommener Abstand des Objekts zum tatsächlichen Abstand des Objekts bei Betrachtung durch die durchsichtige Anzeige zur durchsichtigen Anzeige bewegt, und derart, dass die Repräsentation auf dem Objekt überlagert präsentiert wird;
wobei mindestens eine der optischen Komponenten eine fluidikbasierte Komponente mit dynamischem Fokus umfasst; und/oder
wobei mindestens eine der optischen Komponenten ein Linsensystem mit einer Fokussierfähigkeit auf Basis einer piezoelektrischen Bewegung von mindestens einer Linse umfasst.

11. Verfahren nach Anspruch 10, das ferner Folgendes umfasst:
Bestimmen des Fokusabstands des Benutzers auf Basis von Blickverfolgungsinformationen.

12. Verfahren nach Anspruch 10 oder 11, das ferner Folgendes umfasst:
Bestimmen einer Änderung des Fokusabstands des Benutzers; und
Veranlassen einer Aktualisierung der Repräsentation auf Basis der Änderung.

13. Verfahren nach einem der Ansprüche 10, 11 oder 12, das ferner Folgendes umfasst:
Bestimmen des Punktes der Aufmerksamkeit auf Basis von Blickverfolgungsinformationen oder Benutzerinteraktionen/- eingaben.

14. Computerprogrammanweisungen zum Veranlassen der Vorrichtung (200; 900) nach einem der Ansprüche 1 bis 9, mindestens die Verfahrensschritte von Anspruch 10 durchzuführen.

15. Computerprogrammanweisungen nach Anspruch 14, die ferner Computerprogrammanweisungen zum Veranlassen einer Vorrichtung (200; 900), mindestens Folgendes durchzuführen, umfasst:
Bestimmen einer Änderung des Fokusabstands des Benutzers; und
Veranlassen einer Aktualisierung der Repräsentation auf Basis der Änderung.

## Revendications

1. Appareil comprenant :
un affichage transparent (105a ; 105b ; 119 ; 713a ; 713b ; 717a ; 717b) ;
un premier composant optique (121a ; 701) ; et un deuxième composant optique (121b ; 703) ; dans lequel chacun parmi le premier composant optique et le deuxième composant optique est un composant de mise au point dynamique dont les réglages de point peuvent être changés de manière dynamique pour modifier leur mise au point ; et l'appareil comprend en outre au moins un processeur et au moins une mémoire configurés pour :
déterminer une distance focale d'un utilisateur, dans lequel la distance focale correspond à une distance de l'objet de l'affichage transparent à un point dans le champ de vision de l'utilisateur à travers l'affichage transparent qui est un point d'attention de l'utilisateur, dans lequel un objet (103) se trouve au point d'attention ;
déterminer une représentation (107; 507 ; 513) de données ;
provoquer la présentation de la représentation sur l'affichage transparent ;
ajuster la mise au point du premier composant optique qui est positionné entre l'affichage transparent et l'utilisateur de sorte qu'une distance focale de la représentation (111 ; 509 ; 515) soit réduite ; et
ajuster la mise au point du deuxième composant optique qui est positionné entre l'affichage transparent et l'objet de sorte qu'une distance perçue de l'objet passe à la distance réelle de l'objet par rapport à l'affichage transparent vu à travers l'affichage transparent, et de sorte que la représentation soit présentée comme superposée sur l'objet ;
**caractérisé en ce que**
au moins un des composants optiques comprend un composant de mise au point dynamique à base de fluides ; et/ou
dans lequel au moins un des composants optiques comprend un système de lentilles avec une capacité de mise au point basée sur un déplacement piézoélectrique d'au moins une lentille.

2. Appareil selon la revendication 1, dans lequel la détermination de la distance focale de l'utilisateur est basée sur des informations de suivi du regard.

3. Appareil selon la revendication 1 ou 2, comprenant en outre :
des moyens (202, 204, 206 ; 903, 905) configurés pour déterminer un changement dans la distance focale de l'utilisateur ; et
des moyens (202, 204, 206 ; 903, 905) configurés pour provoquer une mise à jour de la représentation sur la base du changement.

4. Appareil selon l'une des revendications précédentes, comprenant en outre :
des moyens (202, 204, 206 ; 903, 905) configurés pour déterminer le point d'attention sur la base d'informations de suivi du regard ou d'interactions/entrées de l'utilisateur.

5. Appareil selon l'une des revendications précédentes,
comprenant en outre des moyens (202, 204, 206 ; 903, 905) configurés pour provoquer une rotation de l'affichage transparent afin d'ajuster la convergence ; ou
comprenant en outre des moyens (202, 204, 206 ; 903, 905) configurés pour provoquer une projection de lumière sur l'affichage transparent et des moyens (202, 204, 206 ; 903, 905) configurés pour modifier l'angle de la lumière projetée sur l'affichage transparent afin d'ajuster la convergence.

6. Appareil selon l'une des revendications précédentes, dans lequel l'affichage transparent comprend un guide de lumière.

7. Appareil selon l'une des revendications précédentes, dans lequel la mise au point du deuxième composant optique est configurée pour corriger l'effet de la mise au point du premier composant optique sur la distance perçue de l'objet.

8. Appareil selon l'une des revendications précédentes, dans lequel l'appareil comprend une antenne, un microphone, une boussole, un récepteur de localisation GPS, une interface de batterie et/ou une unité de commande d'alimentation.

9. Appareil selon l'une des revendications précédentes, dans lequel un terminal mobile (901) comprend l'appareil.

10. Procédé, réalisé par l'appareil selon l'une des revendications précédentes, le procédé comprenant :
la détermination d'une distance focale d'un utilisateur, dans lequel la distance focale correspond à une distance d'un affichage transparent (105a ; 105b ; 119 ; 713a ; 713b ; 717a ; 717b) à un point dans le champ de vision de l'utilisateur à travers l'affichage transparent qui est un point d'attention de l'utilisateur, dans lequel un objet (103) se trouve au point d'attention ;
la détermination d'une représentation (107 ; 507 ; 513) de données ;
la provocation d'une présentation de la représentation sur l'affichage transparent ;
l'ajustement de la mise au point d'un premier composant optique (121a ; 701) qui est positionné entre l'affichage transparent et l'utilisateur de sorte qu'une distance focale de la représentation (111 ; 509 ; 515) soit réduite ; et
l'ajustement de la mise au point d'un deuxième composant optique (121b ; 703) qui est positionné entre l'affichage transparent et l'objet de sorte qu'une distance perçue de l'objet passe à la distance réelle de l'objet par rapport à l'affichage transparent vu à travers l'affichage transparent, et de sorte que la représentation soit présentée comme superposée sur l'objet ;
dans lequel au moins un des composants optiques comprend un composant de mise au point dynamique à base de fluides ; et/ou
dans lequel au moins un des composants optiques comprend un système de lentilles avec une capacité de mise au point basée sur un déplacement piézoélectrique d'au moins une lentille.

11. Procédé selon la revendication 10, comprenant en outre :
la détermination de la distance focale de l'utilisateur sur la base d'information de suivi du regard.

12. Procédé selon la revendication 10 ou 11, comprenant en outre :
la détermination d'un changement dans la distance focale de l'utilisateur ; et
la provocation d'une mise à jour de la représentation sur la base du changement.

13. Procédé selon l'une des revendications 10, 11 ou 12, comprenant en outre :
la détermination du point d'attention sur la base d'informations de suivi du regard ou d'interactions/entrées de l'utilisateur.

14. Instructions de programme informatique pour amener l'appareil de l'une des revendications 1 à 9 à effectuer au moins les étapes du procédé de la revendications 10.

15. Instructions de programme informatique selon la revendication 14, comprenant en outre des instructions de programme informatique pour amener un appareil (200 ; 900) à effectuer au moins :
la détermination d'un changement dans la distance focale de l'utilisateur ; et
la provocation d'une mise à jour de la représentation sur la base du changement.
